(19) Europäisches Patentamt / European Patent Office / Office européen des brevets

(11) **EP 2 031 473 A1**

(12) **DEMANDE DE BREVET EUROPEEN**

(43) Date de publication:
**04.03.2009 Bulletin 2009/10**

(51) Int Cl.:
**G05B 23/02** (2006.01)

(21) Numéro de dépôt: **08160244.3**

(22) Date de dépôt: **11.07.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **27.08.2007 FR 0757194**

(71) Demandeur: **Peugeot Citroën Automobiles Société Anonyme**
**78170 Velizy Villacoublay (FR)**

(72) Inventeur: **Charkaoui, Nasser**
**92250 La Garenne Colombes (FR)**

(74) Mandataire: **Vigand, Régis Louis Michel**
**PSA Peugeot Citroën**
**Propriété Industrielle (LG081)**
**18, Rue des Fauvelles**
**92250 La Garenne Colombes (FR)**

(54) **Procédé et dispositif de diagnostic de pannes simples survenues dans des matériels**

(57) Un dispositif (D) est dédié au diagnostic de pannes simples survenues dans des matériels ($V_i$) et représentées par des fichiers de données ($JDD_i$). Ce dispositif (D) comprend des moyens de traitement (MT) chargés, en présence d'un vecteur dit « forme » $x_i$ résultant de la transformation d'un fichier de données ($JDD_i$) issu d'un matériel en panne ($V_i$), i) de calculer des valeurs représentatives de similarités entre le vecteur forme $x_i$ et des vecteurs dits « prototype » faisant partie d'une base de données de pannes simples X et représentatifs de M pannes simples identifiées $\omega_j$ pouvant survenir dans le matériel en panne ($V_i$) et de M ensembles de M-1 pannes simples $\omega_{j'}$ (avec j'≠j) excluant chacun l'une des M pannes simples identifiées $\omega_j$, puis ii) de déduire de ces valeurs de similarité une panne simple du matériel en panne ($V_i$).

Figure unique

EP 2 031 473 A1

**Description**

L'invention concerne les diagnostics de pannes qui surviennent dans des matériels, et plus précisément les dispositifs et procédés chargés d'effectuer des diagnostics de pannes à partir d'une base de données de pannes.

On entend ici par « panne » un ensemble d'au moins un défaut de fonctionnement, permanent ou intermittent (ou fugitif), et pouvant faire l'objet d'une détection aboutissant à la génération par une fonction de diagnostic de message (s) d'erreur regroupé(s) dans un fichier de données. Un défaut est dit permanent s'il ne disparaît qu'après une intervention de réparation. Un défaut est dit fugitif s'il apparaît et disparaît de façon aléatoire ou cyclique sans intervention de réparation.

Par ailleurs, on entend ici par « matériel » tout type d'équipement muni d'au moins un élément pouvant faire l'objet d'au moins un défaut de fonctionnement tel que défini ci-dessus. Il pourra par exemple s'agir, bien que non limitativement, d'un véhicule automobile.

Dans certains matériels, comme par exemple les véhicules automobiles, l'électronique dite « embarquée » occupe une place de plus en plus importante. Ainsi, dans l'application précitée, on la retrouve notamment au niveau du moteur, du châssis, des organes de sécurité et dans l'habitacle (en particulier pour gérer l'aérothermie). Il est donc fréquent de voir coexister au sein d'un même véhicule plusieurs dizaines de calculateurs (ou microprocesseurs). Afin de faciliter la gestion d'un si grand nombre de calculateurs, il a été proposé de mettre en oeuvre une technique d'échange de données par multiplexage. Pour ce faire, on peut par exemple constituer un réseau global à partir de plusieurs sous-réseaux, par exemple de type CAN (« Controller Area Network »), connectés entre eux par l'intermédiaire d'un calculateur central (maître).

Le multiplexage est particulièrement utile, mais hélas il induit certains inconvénients. Ainsi, il peut être à l'origine de problèmes de sûreté de fonctionnement et peut rendre difficile la détermination de l'origine des pannes du fait de la propagation dans le réseau global des symptômes de panne due aux interdépendances entre calculateurs et fonctions (fréquemment réparties). Il peut également s'avérer défaillant du fait d'incompatibilités de fonctionnement entre des calculateurs provenant d'équipementiers différents.

Bien qu'il ne soit pas le seul dans ce cas (cela peut être également dû à une stratégie de diagnostic embarqué faiblement robuste), le multiplexage peut être également à l'origine de l'allumage permanent à tort de certains voyants du tableau de bord (c'est ce que l'on appelle les faux défauts) ou du dysfonctionnement par intermittence de certaines fonctions (c'est ce que l'on appelle les défauts intermittents ou fugitifs).

Afin de permettre aux techniciens de déterminer les origines des pannes, on met à leur disposition des fichiers, parfois dits « log », qui contiennent des messages d'erreur générés par des fonctions de diagnostic embarquées consécutivement à la détection ou la disparition de défauts de fonctionnement (ou dysfonctionnements), permanents ou intermittents.

Les contenus de ces fichiers log sont cependant souvent difficiles à exploiter du fait qu'ils sont analysés au moyen de méthodes basiques de diagnostic de pannes et de bases de données de défauts. Cela résulte notamment du fait qu'il n'existe pas de relations bijectives entre les codes de défaut (répertoriés dans les bases de données de défauts) et les pannes réelles du fait des interdépendances fonctionnelles, et donc qu'une panne peut être représentée par un ensemble de codes de défaut. Cela résulte également du fait que les fichiers log peuvent être « pollués » par de fausses alertes et sont en outre de type multidimensionnel.

Afin de faciliter le travail des techniciens, on a proposé de mettre à leur disposition des dispositifs (ou outils) de diagnostic de pannes couplés aux base(s) de données de pannes. Ainsi, le document brevet WO 2006/127051 propose de collecter dans une base de données, par exemple via l'Internet, les informations décrivant les pannes pouvant survenir dans des matériels, puis d'effectuer une analyse statistique de données stockées afin de synthétiser les données correspondant à une panne par un nombre très limité de vecteurs d'informations conservant les propriétés statistiques principales des données initiales. Ce type d'analyse statistique améliore la situation, mais de façon insuffisante car dans bon nombre de cas il fournit plus aux techniciens des pistes pour déterminer l'origine réelle des pannes que de véritables diagnostics leur indiquant l'origine réelle des pannes.

L'invention a donc pour but d'améliorer la situation dans le cas de pannes simples.

Elle propose à cet effet un procédé, dédié au diagnostic de pannes simples survenues dans des matériels et représentées par des fichiers de données, et consistant, en présence d'un vecteur dit « forme » $x_i$ résultant de la transformation d'un fichier de données issu d'un matériel en panne :

i) à calculer des valeurs représentatives de similarités entre le vecteur forme $x_i$ et des vecteurs dits « prototype » faisant partie d'une base de données de pannes simples X et représentatifs de M pannes simples identifiées $\omega_j$ pouvant survenir dans le matériel en panne et de M ensembles de M-1 pannes simples $\omega_{j'}$ (avec $j' \neq j$) excluant chacun l'une des M pannes simples identifiées $\omega_j$, puis

ii) à déduire des valeurs de similarité une panne simple du matériel en panne.

Le procédé selon l'invention peut comporter d'autres caractéristiques qui peuvent être prises séparément ou en combinaison, et notamment :

- au i) les valeurs de similarité peuvent être les résultats de mesures de dissimilarité entre le vecteur forme $x_i$ et des vecteurs prototypes. Mais, on comprendra qu'elles pourraient également être les résultats de mesures de similarité (qui sont les opérations inverses des mesures de dissimilarité) ;

➢ en présence d'une base de données de pannes X contenant M premiers vecteurs prototypes $P1_j$ représentatifs respectivement des M pannes identifiées $\omega_j$ et M seconds vecteurs prototypes $P2_j$ représentatifs respectivement de M ensembles de M-1 pannes simples $\omega_{j'}$ (avec j'≠j) excluant chacun l'une desdites M pannes identifiées $\omega_j$, on peut effectuer au i), pour chaque panne identifiée $\omega_j$, une première mesure de dissimilarité entre le vecteur forme $x_i$ et le premier vecteur prototype $P1_j$ associé à cette panne identifiée $\omega_j$, afin d'obtenir une première valeur de similarité $S1_j$, et une seconde mesure de dissimilarité entre le vecteur forme $x_i$ et le second vecteur prototype $P2_j$ associé à cette panne identifiée $\omega_j$, afin d'obtenir une seconde valeur de similarité $S2_j$, puis au ii) on peut retenir chaque première valeur de similarité $S1_j$ qui est inférieure à la seconde valeur de similarité $S2_j$ correspondante, et sélectionner parmi ces premières valeurs de similarité $S1_j$ retenues celle qui est la plus petite et qui correspond alors à la panne du matériel en panne ;

• au ii) en présence de plusieurs premières valeurs de similarité $S1_j$ sélectionnées et égales, on peut signaler les pannes $\omega_j$ qui correspondent respectivement à ces premières valeurs de similarité $S1_j$ sélectionnées ;
• au ii), en présence de premiers vecteurs prototypes $P1_j$ constitués, d'une part, d'un premier vecteur $a1_j$ dont chaque variable $a1_{jk}$ constituante est représentative de la valeur de variable $x_{ik}$ (k = 1 à N) qui est majoritaire dans les vecteurs formes $x_i$ ($x_i = (x_{i1},..., x_{iN})$) considérés d'un premier sous-ensemble $X1_j$, qui correspondent à la panne $\omega_j$, et d'autre part, d'un second vecteur $\varepsilon1_j$ dont chaque variable $\varepsilon1_{jk}$ constituante est représentative de la variation des valeurs de variable $x_{ik}$ du premier sous-ensemble $X1_j$ par rapport à la variable $a1_{jk}$ correspondante, et en présence de seconds vecteurs prototypes $P2_j$ constitués, d'une part, d'un premier vecteur $a2_j$ dont chaque variable $a2_{jk}$ constituante est représentative de la valeur de variable $x_{ik}$ qui est majoritaire dans les vecteurs formes $x_i$ considérés d'un second sous-ensemble $X2_j$, qui ne correspondent pas à la panne $\omega_j$, et d'autre part, d'un second vecteur $\varepsilon2_j$ dont chaque variable $\varepsilon2_{jk}$ constituante est représentative de la variation des valeurs de variable $x_{ik}$ du second sous-ensemble $X2_j$ par rapport à la variable $a2_{jk}$ correspondante, on peut déterminer chaque première valeur de similarité $S1_j$ en effectuant une somme pondérée des différences entre les variables de même indice k du vecteur forme $x_i$ et du premier vecteur $a1_j$, et on peut déterminer chaque seconde valeur de similarité $S2_j$ en effectuant une somme pondérée des différences entre les variables de même indice k du vecteur forme $x_i$ et du premier vecteur $a2_j$;

o chaque première mesure de dissimilarité peut par exemple être définie par la relation

$$ds1(x_i, P1_j) = \sum_{k=1}^{N}\left( \ln\frac{1-\varepsilon1_{jk}}{\varepsilon1_{jk}} \right)\left| x_{ik} - a1_{jk} \right|,$$

et chaque seconde mesure de dissimilarité peut par exemple être définie par la relation

$$ds2(x_i, P2_j) = \sum_{k=1}^{N}\left( \ln\frac{1-\varepsilon2_{jk}}{\varepsilon2_{jk}} \right)\left| x_{ik} - a2_{jk} \right| \; ;$$

- en cas de réception d'un fichier de données, on peut transformer ce dernier en un vecteur forme $x_i$ constitué d'un ensemble de N variables $x_{ik}$ ($x_i = (x_{i1},..., x_{iN})$, avec k = 1 à N) associées respectivement à N codes de défaut $CD_{ik}$ pouvant survenir dans le matériel en panne, chaque variable $x_{ik}$ pouvant prendre des première et seconde valeurs représentatives respectivement de la détection au moins une fois et de l'absence de détection du code de défaut

$CD_{ik}$ dans le fichier reçu.

L'invention propose également un dispositif, dédié au diagnostic de pannes simples survenues dans des matériels et représentées par des fichiers de données, et comprenant des moyens de traitement chargés, en présence d'un vecteur dit « forme » $x_i$ résultant de la transformation d'un fichier de données issu d'un matériel en panne :

- de calculer des valeurs représentatives de similarités entre le vecteur forme $x_i$ et des vecteurs dits « prototype » faisant partie d'une base de données de pannes simples X et représentatifs de M pannes simples identifiées $\omega_j$ pouvant survenir dans le matériel en panne et de M ensembles de M-1 pannes simples $\omega_{j'}$ (avec j'≠j) excluant chacun l'une des M pannes simples identifiées $\omega_j$, puis
- de déduire de ces valeurs de similarité une panne simple du matériel en panne.

Le dispositif selon l'invention peut comporter d'autres caractéristiques qui peuvent être prises séparément ou en combinaison, et notamment :

- ses moyens de traitement peuvent être chargés de calculer des mesures de dissimilarité entre le vecteur forme $x_i$ et des vecteurs prototypes, les résultats de ces calculs étant les valeurs de similarité ;

➢ en présence d'une base de données de pannes X contenant M premiers vecteurs prototypes $P1_j$ représentatifs respectivement des M pannes identifiées $\omega_j$ et M seconds vecteurs prototypes $P2_j$ représentatifs respectivement de M ensembles de M-1 pannes simples $\omega_{j'}$ (avec j'≠j) excluant chacun l'une des M pannes identifiées $\omega_j$, ses moyens de traitement peuvent être chargés i) d'effectuer pour chaque panne identifiée $\omega_j$, d'une part, une première mesure de dissimilarité entre le vecteur forme $x_i$ et le premier vecteur prototype $P1_j$ associé à cette panne identifiée $\omega_j$, afin d'obtenir une première valeur de similarité $S1_j$, et d'autre part, une seconde mesure de dissimilarité entre le vecteur forme $x_i$ et le second vecteur prototype $P2_j$ associé à cette panne identifiée $\omega_j$, afin d'obtenir une seconde valeur de similarité $S2_j$, ii) de retenir chaque première valeur de similarité $S1_j$ qui est inférieure à la seconde valeur de similarité $S2_j$ correspondante, et iii) de sélectionner parmi ces premières valeurs de similarité $S1_j$ retenues celle qui est la plus petite et qui correspond alors à la panne du matériel en panne ;

• en cas de sélection de plusieurs premières valeurs de similarité $S1_j$ égales, ses moyens de traitement peuvent être chargés de signaler les pannes $\omega_j$ qui correspondent respectivement à ces premières valeurs de similarité $S1_j$ sélectionnées ;
• en présence de premiers vecteurs prototypes $P1_j$ constitués, d'une part, d'un premier vecteur $a1_j$ dont chaque variable $a1_{jk}$ constituante est représentative de la valeur de variable $x_{ik}$ (k = 1 à N) qui est majoritaire dans les vecteurs formes $x_i$ ($x_i = (x_{i1},..., x_{iN})$) considérés d'un premier sous-ensemble $X1_j$, qui correspondent à la panne $\omega_j$, et d'autre part, d'un second vecteur $\varepsilon1_j$ dont chaque variable $\varepsilon1_{jk}$ constituante est représentative de la variation des valeurs de variable $x_{ik}$ du premier sous-ensemble $X1_j$ par rapport à la variable $a1_{jk}$ correspondante, et en présence de seconds vecteurs prototypes $P2_j$ constitués, d'une part, d'un premier vecteur $a2_j$ dont chaque variable $a2_{jk}$ constituante est représentative de la valeur de variable $x_{ik}$ qui est majoritaire dans les vecteurs formes $x_i$ considérés du second sous-ensemble $X2_j$, qui ne correspondent pas à la panne $\omega_j$, et d'autre part, d'un second vecteur $\varepsilon2_j$ dont chaque variable $\varepsilon2_{jk}$ constituante est représentative de la variation des valeurs de variable $x_{ik}$ du second sous-ensemble $X2_j$ par rapport à la variable $a2_{jk}$ correspondante, ses moyens de traitement peuvent être chargés i) de déterminer chaque première valeur de similarité $S1_j$ en effectuant une somme pondérée des différences entre les variables de même indice k du vecteur forme $x_i$ et du premier vecteur $a1_j$, et ii) de déterminer chaque seconde valeur de similarité $S2_j$ en effectuant une somme pondérée des différences entre les variables de même indice k du vecteur forme $x_i$ et du premier vecteur $a2_j$ ;

o ses moyens de traitement peuvent être chargés de déterminer i) chaque première mesure de dissimilarité à partir de la relation

$$ds1(x_i, P1_j) = \sum_{k=1}^{N} \left( \ln \frac{1 - \varepsilon 1_{jk}}{\varepsilon 1_{jk}} \right) \left| x_{ik} - a1_{jk} \right|,$$

et ii) chaque seconde mesure de dissimilarité à partir de la relation

$$ds2(x_i, P2_j) = \sum_{k=1}^{N} \left( \ln \frac{1 - \varepsilon 2_{jk}}{\varepsilon 2_{jk}} \right) \left| x_{ik} - a2_{jk} \right| \; ;$$

- en cas de réception d'un fichier de données, ses moyens de traitement peuvent être chargés de transformer ce fichier de données reçu en un vecteur forme $x_i$ constitué d'un ensemble de N variables $x_{ik}$ ($x_i = (x_{i1},..., x_{iN})$, avec k = 1 à N) associées respectivement à N codes de défaut $CD_{ik}$ pouvant survenir dans le matériel en panne, chaque variable $x_{ik}$ pouvant prendre des première et seconde valeurs représentatives respectivement de la détection au moins une fois et de l'absence de détection du code de défaut $CD_{ik}$ dans le fichier reçu.

De préférence, la base de données est obtenue par un procédé de génération de base(s) de données représentatives de pannes survenues dans des matériels ($V_i$), consistant i) à stocker des fichiers de données ($JDD_i$) issus de matériels ($V_i$) et représentatifs de défauts survenus dans certains de leurs éléments, puis ii) à transformer chaque fichier de données ($JDD_i$) en un vecteur dit « forme » $x_i$, et iii) à construire pour chacune de M pannes identifiées $\omega_j$ des vecteurs dits « prototypes » à partir des vecteurs formes $x_i$, de manière à constituer une base de données X contenant des vecteurs prototypes représentatifs des M pannes identifiées $\omega_j$ et de M ensembles de M-1 pannes $\omega_j$, (avec j'≠j) excluant chacun l'une des M pannes identifiées $\omega_j$. Préférentiellement, au ii) on transforme chaque fichier de données ($JDD_i$) en un vecteur forme $x_i$ constitué d'un ensemble de N variables $x_{ik}$ ($x_i = (x_{i1},..., x_{iN})$, avec k = 1 à N) associées respectivement à N codes de défaut $CD_{ik}$ pouvant survenir dans le matériel ($V_i$) correspondant, chaque variable $x_{ik}$ pouvant prendre des première et seconde valeurs représentatives respectivement de la détection au moins une fois et de l'absence de détection du code de défaut $CD_{ik}$ dans ledit fichier ($JDD_i$). Avantageusement, au ii) on détermine parmi les vecteurs formes $x_i$ ceux qui ne correspondent qu'à une unique panne puis parmi ces derniers ceux qui correspondent à une panne $\omega_j$ (j = 1 à M) choisie parmi les M pannes identifiées $\omega_j$ de manière à regrouper pour chaque panne identifiée $\omega_j$ dans des premier $X1_j$ et second $X2_j$ sous-ensembles, les vecteurs formes $x_i$ qui respectivement correspondent et ne correspondent pas à cette panne $\omega_j$, et en ce qu'au iii) on construit pour chaque panne identifiée $\omega_j$ des premier $P1_j$ et second $P2_j$ vecteurs prototypes à partir des vecteurs formes $x_i$ qui sont respectivement contenus dans lesdits premier $X1_j$ et second $X2_j$ sous-ensembles, de manière à constituer une base de données de pannes X contenant M premiers vecteurs prototypes $P1_j$ représentatifs respectivement des M pannes $\omega_j$ identifiées et M seconds vecteurs prototypes $P2_j$ représentatifs respectivement de M ensembles de M-1 pannes $\omega_j$, (avec j'≠j) excluant chacun l'une des M pannes identifiées $\omega_j$.

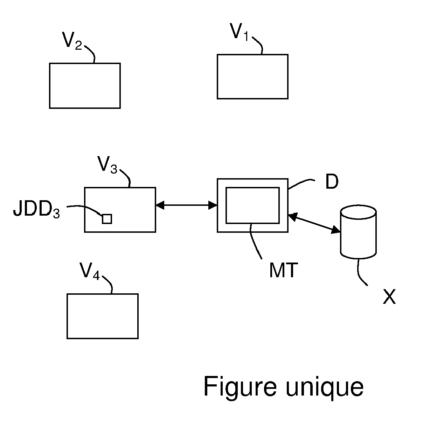

D'autres caractéristiques et avantages de l'invention apparaîtront à l'examen de la description détaillée ci-après, et du dessin annexé, sur lequel l'unique figure illustre de façon schématique et fonctionnelle un exemple de réalisation d'un dispositif (ou outil) de diagnostic de pannes selon l'invention recevant un fichier log d'un matériel.

Le dessin annexé pourra non seulement servir à compléter l'invention, mais aussi contribuer à sa définition, le cas échéant.

L'invention a pour but de faciliter la détermination de l'origine réelle des pannes qui surviennent dans des matériels.

Dans ce qui suit, on considère à titre d'exemple non limitatif que les matériels ($V_i$) sont des véhicules automobiles. Mais, l'invention n'est pas limitée à ce type de matériel. Elle concerne en effet tout type de matériel (ou équipement) comportant au moins un élément, pouvant faire l'objet d'au moins un défaut de fonctionnement détectable, et d'au moins un module de diagnostic embarqué, chargé au moins de générer des messages d'erreurs consécutivement à la détection ou la disparition de défauts de fonctionnement (ou dysfonctionnements), permanents ou intermittents. Il est rappelé que ces messages d'erreur sont regroupés dans un fichier de données $JDD_i$, dit « log », qui est stocké dans le matériel $V_i$ correspondant et qui peut être extrait en vue d'une analyse par un dispositif (ou outil) de diagnostic de pannes externe.

Un fichier log $JDD_i$ peut être considéré comme un ensemble d'enregistrements correspondant chacun à un message d'erreur, généralement constitué de trois champs principaux. Le premier champ principal, appelé « apparition/disparition », indique si le message résulte de la détection ou de la disparition d'un défaut de fonctionnement. Il peut par exemple comprendre le signe « + » (apparition) ou « - » (disparition). Le deuxième champ principal, appelé « code

de défaut » $CD_{ik}$, est un code généralement de type hexadécimal qui désigne le défaut détecté. Le troisième champ principal, parfois appelé « libellé », décrit le défaut détecté.

Un fichier log $JDD_i$ peut être schématiquement représenté sous la forme d'un tableau du type de celui donné ci-dessous :

| Apparition / disparition | Code de défaut | Libellé |
|---|---|---|
| + | 7159 | Défaut information niveau d'huile moteur invalide |
| + | 7173 | Défaut information température huile moteur invalide |
| + | 7362 | Voyant inhibition sac passager |
| - | 7173 | Défaut information température huile moteur invalide |
| - | 7159 | Défaut information niveau d'huile moteur invalide |
| + | 7173 | Défaut information température huile moteur invalide |
| + | F01D | Défaut absence de communication avec le calculateur suspension |
| - | 7173 | Défaut information température huile moteur invalide |
| + | F011 | Défaut BSI muette sur le réseau CAN carrosserie |

On considère dans ce qui suit que l'on a identifié M pannes $\omega_j$, avec j = 1 à M, pour un modèle de véhicules $V_i$. Par ailleurs, on considère dans ce qui suit qu'il existe N codes de défaut $CD_{ik}$, avec k = 1 à N, pour le modèle de véhicules $V_i$ ici considéré. De plus, on dispose d'une table de correspondance entre chacune des M pannes $\omega_j$ et un ensemble d'au moins un code de défaut $CD_{ik}$.

Afin d'atteindre le but précité, l'invention propose un procédé et un dispositif D dédiés au diagnostic de pannes survenues dans des matériels $V_i$, ici des véhicules automobiles. Dans l'exemple non limitatif illustré, seuls quatre véhicules $V_1$ à $V_4$ (i = 1 à 4) ont été représentés, mais l'invention n'est pas limitée à ce nombre. Elle concerne en effet n'importe quel nombre de véhicules, dès lors qu'il est au moins égal à un (1).

Un dispositif D selon l'invention comprend au moins un module de traitement MT chargé, en présence d'un vecteur dit « forme » $x_i$, qui résulte de la transformation d'un fichier de données $JDD_i$ issu d'un véhicule en panne $V_i$, par exemple V3, de calculer des valeurs qui représentent des similarités entre ce vecteur forme $x_i$ et des vecteurs dits « prototype » qui font partie d'une base de données de pannes simples X et qui sont représentatifs de M pannes simples identifiées $\omega_j$ qui sont susceptibles de survenir dans le matériel en panne $V_3$ (compte tenu de son modèle) et de M ensembles de M-1 pannes simples $\omega_{j'}$ (avec $j' \neq j$) excluant chacun l'une des M pannes simples identifiées $\omega_j$, puis de déduire de ces valeurs de similarité une panne simple du matériel en panne $V_3$.

On comprendra qu'à un vecteur prototype représentant une panne simple $\omega_1$ correspond un autre vecteur prototype représentant l'ensemble des M-1 autres pannes simples $\omega_2$ à $\omega_M$, parfois dit panne complémentaire de cette panne simple $\omega_1$ et donc différente de cette dernière. De même, à un vecteur prototype représentant une panne simple $\omega_2$ correspond un autre vecteur prototype représentant l'ensemble des M-1 autres pannes simples $\omega_1$, et $\omega_3$ à $\omega_M$, parfois dit panne complémentaire de cette panne simple $\omega_2$ et donc différente de cette dernière, et ainsi de suite.

Il est important de noter que la base de données de pannes simples X peut être externe au dispositif D (comme dans l'exemple non limitatif illustré), mais accessible à celui-ci, par exemple par le biais d'un réseau de communication (éventuellement via l'Internet), ou bien faire partie dudit dispositif D. Par ailleurs, une base de données de pannes X peut être soit spécifique à un unique modèle (de véhicules $V_i$), soit dédiée à plusieurs modèles (par exemple tous ceux d'une même marque, voire même de plusieurs marques). Une base de données de pannes X peut être stockée dans n'importe quel type de moyens de stockage, et notamment dans une mémoire.

Il est également important de noter que le dispositif D peut n'être agencé que pour recevoir des vecteurs formes $x_i$ résultant de la transformation de fichiers de données $JDD_i$ générés dans des véhicules en panne $V_i$. Mais, dans une variante, il peut être également agencé de manière à recevoir les fichiers de données $JDD_i$ générés dans des véhicules en panne $V_i$. Dans ce cas, son module de traitement MT est chargé transformer chaque fichier de données $JDD_i$ reçu en un vecteur forme $x_i$ qui est par exemple constitué d'un ensemble de N variables $x_{ik}$ (soit $x_i = (x_{i1},..., x_{iN})$), associées respectivement aux N codes de défaut $CD_{ik}$ qui peuvent survenir dans un véhicule du même modèle que celui qui est en panne (ici $V_3$).

Chaque variable $x_{ik}$ d'un vecteur forme $x_i$ correspond alors à l'un des N codes de défaut $CD_{ik}$, et peut prendre soit une première valeur représentative de la détection au moins une fois du code de défaut $CD_{ik}$ dans le fichier $JDD_i$ (duquel est issu le vecteur forme $x_i$), soit une seconde valeur représentative de l'absence de détection du code de défaut $CD_{ik}$ dans ledit fichier $JDD_i$.

On notera que si un même code de défaut $CD_{ik}$ peut être généré par P calculateurs différents (P≥2) au sein d'un même véhicule $V_i$, on prévoit alors P variables différentes $x_{ik}$ dans le vecteur forme $x_i$.

A titre d'exemple non limitatif, chaque variable $x_{ik}$ peut être binaire. Dans ce cas, sa première valeur peut être égale à 1, tandis que sa seconde valeur est égale à 0. Mais l'inverse est également possible. On comprendra qu'avec ce codage binaire, on ne prend en compte qu'une seule fois l'occurrence d'un évènement. En d'autres termes, un défaut intermittent n'est comptabilisé qu'une seule fois. Cette solution est actuellement préférée, car il est considéré que le nombre et/ou la fréquence d'occurrence d'un défaut n'apporte pas d'information supplémentaire. Mais, cette comptabilisation peut être envisagée.

Les valeurs de similarité qui sont utilisées par le module de traitement MT sont par exemple les résultats de mesures de dissimilarité entre le vecteur forme $x_i$ et des vecteurs prototypes contenus dans la base de données de pannes X (qui correspond au véhicule en panne $V_3$).

Il est avantageux que cette base de données de pannes X contienne pour chacune des M pannes $\omega_j$, identifiées pour le véhicule en panne $V_3$, un premier vecteur prototype $P1_j$ qui la représente, et un second vecteur prototype $P2_j$ qui représente l'ensemble des M-1 pannes simples $\omega_j$, (avec j'≠j), parfois dit panne complémentaire de la panne simple identifiée $\omega_j$ (et donc qui diffère de cette dernière). En d'autres termes, la base de données de pannes X contient M premiers vecteurs prototypes $P1_j$ représentatifs respectivement des M pannes identifiées $\omega_j$ et M seconds vecteurs prototypes $P2_j$ représentatifs respectivement de M ensembles de M-1 pannes simples $\omega_j$, (avec j'≠j) complémentaires chacun de l'une des M pannes simples identifiées $\omega_j$.

Par exemple, chaque premier vecteur prototype $P1_j$ est constitué d'un premier vecteur $a1_j$ et d'un second vecteur $\varepsilon1_j$.

Chaque premier vecteur $a1_j$ est par exemple constitué de N variables $a1_{jk}$, soit $a1_j = (a1_{j1}, a1_{j2},..., a1_{jN})$. Chaque variable $a1_{jk}$ représente par exemple la valeur de variable $x_{ik}$ qui est majoritaire au sein des vecteurs formes $x_i$ considérés dans le premier sous-ensemble $X1_j$ et correspondant à la panne identifiée $\omega_j$. Par conséquent, chaque variable $a1_{jk}$ ne peut prendre que les mêmes valeurs que les variables $x_{ik}$ (par exemple 0 et 1). Par exemple, si $X1_j$ comprend cinq vecteurs formes ($n1_j$=5), et que trois valeurs de $x_{ik}$ dans ces vecteurs formes sont nulles (0) tandis que les deux autres valeurs sont égales à un (1), alors la valeur de variable $x_{ik}$ qui est majoritaire dans le sous-ensemble $X1_j$ est la valeur nulle (0) et par conséquent la valeur de $a1_{jk}$ est nulle (0).

Chaque second vecteur $\varepsilon1_j$ est par exemple constitué de N variables $\varepsilon1_{jk}$, soit $\varepsilon1_j = (\varepsilon1_{j1}, \varepsilon1_{j2},..., \varepsilon1_{jN})$. Chaque variable $\varepsilon1_{jk}$ représente la variation (ou dispersion) des valeurs de variable $x_{ik}$ par rapport à la variable $a1_{jk}$ correspondante. Par conséquent, lorsque les variables $a1_{jk}$ prennent les valeurs 0 et 1, les variables $\varepsilon1_{jk}$ ne peuvent prendre que des valeurs comprises entre 0 (par valeur supérieure) et ½ (par valeur inférieure). Par exemple, chaque variable $\varepsilon1_{jk}$ peut être déterminée à partir de la relation suivante :

$$\varepsilon1_{jk} = \frac{1}{n1_j} * \sum_{x_i \in \omega_j} \left| x_{ik} - a1_{jk} \right|,$$

où $n1_j$ est égal au nombre de vecteurs formes $x_i$ dans le premier sous-ensemble $X1_j$, et «‖» désigne l'opérateur valeur absolue.

De même, chaque second vecteur prototype $P2_j$ est par exemple constitué d'un premier vecteur $a2_j$ et d'un second vecteur $\varepsilon2_j$.

Chaque premier vecteur $a2_j$ est par exemple constitué de N variables $a2_{jk}$, soit $a2_j = (a2_{j1}, a2_{j2},..., a2_{jN})$. Chaque variable $a2_{jk}$ représente la valeur de variable $x_{ik}$ qui est majoritaire au sein des vecteurs formes $x_i$ considérés dans le second sous-ensemble $X2_j$ et correspondant à l'ensemble des M-1 pannes $\omega_j$, (avec j'≠j), parfois dit panne complémentaire de la panne $\omega_j$. Par conséquent, chaque variable $a2_{jk}$ ne peut prendre que les mêmes valeurs que les variables $x_{ik}$ (par exemple 0 et 1). Par exemple, si $X2_j$ comprend cinq vecteurs formes ($n2_j$=5) et que deux valeurs de $x_{ik}$ dans ces vecteurs formes sont nulles (0), tandis que trois d'entre elles sont égales à un (1), alors la valeur de $x_{ik}$ qui est majoritaire est la valeur un (1) et par conséquent la valeur de $a1_{jk}$ est égale à un (1).

Chaque second vecteur $\varepsilon2_j$ est par exemple constitué de N variables $\varepsilon2_{jk}$, soit $\varepsilon2_j = (\varepsilon2_{j1}, \varepsilon2_{j2},..., \varepsilon2_{jN})$. Chaque variable $\varepsilon2_{jk}$ représente la variation (ou dispersion) des valeurs de variable $x_{ik}$ par rapport à la variable $a2_{jk}$ correspondante. Par conséquent, lorsque les variables $a2_{jk}$ prennent les valeurs 0 et 1, les variables $\varepsilon2_{jk}$ ne peuvent prendre que des valeurs comprises entre 0 (par valeur supérieure) et ½ (par valeur inférieure). Par exemple, chaque variable $\varepsilon2_{jk}$ peut être déterminée à partir de la relation suivante :

$$\varepsilon 2_{jk} = \frac{1}{n2_j} * \sum_{x_i \notin \omega_j} \left| x_{ik} - a2_{jk} \right|,$$

où $n2_j$ est égal au nombre de vecteurs formes $x_i$ dans le second sous-ensemble $X2_j$.

Lorsque la base de données de pannes X est constituée des M paires de vecteurs prototypes P1j et P2j, et que le module de traitement MT dispose d'un vecteur forme $x_i$, il peut par exemple effectuer des première et seconde mesures de dissimilarité pour chaque panne identifiée $\omega_j$.

Chaque première mesure de dissimilarité se fait entre le vecteur forme $x_i$ et le premier vecteur prototype $P1_j$ associé à la panne identifiée $\omega_j$ considérée. Elle fournit une première valeur de similarité $S1_j$.

Par exemple, le module de traitement MT peut déterminer chaque première valeur de similarité $S1_j$ en effectuant une somme pondérée $ds1(x_i, P1_j)$ des différences entre les variables de même indice k du vecteur forme $x_i$ et du premier vecteur $a1_j$. Pour ce faire, il peut par exemple utiliser la relation :

$$ds1(x_i, P1_j) = \sum_{k=1}^{N} \left( \ln \frac{1 - \varepsilon 1_{jk}}{\varepsilon 1_{jk}} \right) \left| x_{ik} - a1_{jk} \right|,$$

où « In » désigne l'opérateur logarithme népérien.

Chaque seconde mesure de dissimilarité se fait entre le vecteur forme $x_i$ et le second vecteur prototype $P2_j$ associé à la panne identifiée $\omega_j$ considérée. Elle fournit une seconde valeur de similarité $S2_j$.

Par exemple, le module de traitement MT peut déterminer chaque seconde valeur de similarité $S2_j$ en effectuant une somme pondérée $ds2(x_i, P2_j)$ des différences entre les variables de même indice k du vecteur forme $x_i$ et du second vecteur $a2_j$. Pour ce faire, il peut par exemple utiliser la relation :

$$ds2(x_i, P2_j) = \sum_{k=1}^{N} \left( \ln \frac{1 - \varepsilon 2_{jk}}{\varepsilon 2_{jk}} \right) \left| x_{ik} - a2_{jk} \right|.$$

Il est important de noter que les valeurs de similarité qui sont utilisées par le module de traitement MT ne sont pas obligatoirement les résultats des mesures de dissimilarité décrites ci-avant. Elles peuvent être également les résultats de mesures de dissimilarité différentes de celles décrites ci-avant. Notamment, on peut utiliser d'autres types de pondération que celui décrit ci-avant

$$\left( \left( \ln \frac{1 - \varepsilon 1_{jk}}{\varepsilon 1_{jk}} \right) \quad \text{et} \quad \left( \ln \frac{1 - \varepsilon 2_{jk}}{\varepsilon 2_{jk}} \right) \right).$$

De même, elles peuvent être également les résultats de mesures de similarité.

Dans le cas de mesures de dissimilarité le module de traitement MT compare chaque première valeur de similarité $S1_j$ à la seconde valeur de similarité $S2_j$ correspondante, afin de déterminer celle qui est la plus petite. On comprendra en effet que si une première valeur de similarité $S1_j$ est inférieure à la seconde valeur de similarité $S2_j$ correspondante, cela signifie que le vecteur forme $x_i$ analysé à une probabilité plus importante de correspondre à la panne identifiée $\omega_j$ (représentée par le premier vecteur prototype $P1_j$) qu'aux M-1 pannes $\omega_{j'}$ (avec j'≠j), parfois dites panne complémentaire de cette panne identifiée $\omega_j$ (représentée par le second vecteur prototype $P2_j$).

Puis, le module de traitement MT retient chaque première valeur de similarité $S1_j$ qui est inférieure à la seconde valeur de similarité $S2_j$ correspondante, afin de sélectionner parmi ces premières valeurs de similarité $S1_j$ retenues celle qui est la plus petite. On comprendra en effet que plus une première valeur de similarité $S1_j$ sélectionnée est petite, plus la probabilité que le vecteur forme $x_i$ analysé corresponde à la panne identifiée $\omega_j$ (qui correspond à $S1_j$) est importante. Par conséquent, le module de traitement MT désigne comme panne du véhicule en panne $V_3$, celle (parmi les M) qui correspond à la première valeur de similarité $S1_j$ sélectionnée la plus petite.

On notera qu'en cas de sélection de plusieurs premières valeurs de similarité $S1_j$ égales, le module de traitement MT peut par exemple signaler les pannes $\omega_j$ qui correspondent respectivement à chacune d'entre elles. Le technicien devra alors déterminer celle qui correspond effectivement à la panne survenue dans le véhicule $V_3$.

Par ailleurs, on notera que si l'on utilise des mesures de similarité à la place de mesures de dissimilarité, le module de traitement MT compare chaque première valeur de similarité $S1_j$ (résultat d'une première mesure de similarité) à la seconde valeur de similarité $S2_j$ correspondante (résultat d'une seconde mesure de similarité), afin de déterminer celle qui est la plus grande. On comprendra en effet que dans ce cas si une première valeur de similarité $S1_j$ est supérieure à la seconde valeur de similarité $S2_j$ correspondante, cela signifie que le vecteur forme $x_i$ analysé a une probabilité plus importante de correspondre à la panne identifiée $\omega_j$ (représentée par le premier vecteur prototype $P1_j$) qu'aux M-1 pannes $\omega_{j'}$ (avec j'≠j), parfois dites panne complémentaire de cette panne identifiée $\omega_j$ (représentée par le second vecteur prototype $P2_j$). De même, dans ce cas le module de traitement MT retient chaque première valeur de similarité $S1_j$ qui est supérieure à la seconde valeur de similarité $S2_j$ correspondante, afin de sélectionner parmi ces premières valeurs de similarité $S1_j$ retenues celle qui est la plus grande. On comprendra en effet que dans ce cas plus une première valeur de similarité $S1_j$ sélectionnée est grande, plus la probabilité que le vecteur forme $x_i$ analysé corresponde à la panne identifiée $\omega_j$ (qui correspond à $S1_j$) est importante. Par conséquent, dans ce cas le module de traitement MT désigne comme panne du véhicule en panne $V_3$, celle (parmi les M) qui correspond à la première valeur de similarité $S1_j$ sélectionnée la plus grande.

On notera également que lorsqu'un vecteur forme $x_i$ aboutit à des premières valeurs de similarité $S1_j$ qui sont toutes supérieures ou inférieures (selon que l'on utilise respectivement des mesures de dissimilarité ou de similarité) aux secondes valeurs de similarité $S2_j$ correspondantes, ou bien que la première valeur de similarité retenue indique une similarité insuffisante avec la panne identifiée $\omega_j$, le module de traitement MT peut éventuellement stocker ce vecteur forme $x_i$ dans la base de données de vecteurs formes. En effet, ce cas de figure signifie que la panne correspondant au vecteur forme $x_i$ n'est pas représentée dans la base de données de pannes X. Le cas considéré doit alors être expertisé afin d'étudier la nouvelle panne et la base de connaissances sera ensuite mise à jour afin de prendre en compte la nouvelle panne étudiée. Cela se traduira par la définition de nouveaux premiers $P1_j$ et second $P2_j$ vecteurs prototypes qui seront associés à la nouvelle panne identifiée.

Le dispositif de diagnostic de pannes D selon l'invention, et notamment son module de traitement MT ainsi qu'éventuellement la base de données de pannes X (qu'il contient éventuellement), peut être réalisé sous la forme de circuits électroniques, de modules logiciels (ou informatiques), ou d'une combinaison de circuits et de logiciels.

L'invention peut être également vue sous l'angle d'un procédé, dédié au diagnostic de pannes simples survenues dans des matériels $V_i$ et représentées par des fichiers de données $JDD_i$, et pouvant par exemple être mis en oeuvre par un dispositif de diagnostic de pannes D du type de celui décrit ci-avant. Ce procédé reprenant les fonctionnalités principales et auxiliaires présentées ci-avant, seule sa combinaison de fonctionnalités principales est présentée ci-dessous.

Ce procédé consiste, en présence d'un vecteur forme $x_i$ résultant de la transformation d'un fichier de données $JDD_i$ issu d'un matériel en panne $V_i$ :

i) à calculer des valeurs représentatives de similarités entre ce vecteur forme $x_i$ et des vecteurs prototypes faisant partie d'une base de données de pannes simples X et représentatifs de M pannes simples identifiées $\omega_j$ pouvant survenir dans le matériel en panne $V_i$ et de M ensembles de M-1 pannes simples $\omega_{j'}$ (avec j'≠j) excluant chacun l'une des M pannes simples identifiées $\omega_j$, puis

ii) à déduire de ces valeurs de similarité une panne simple du matériel en panne $V_i$.

L'invention ne se limite pas aux modes de réalisation de dispositif et de procédé de diagnostic de pannes simples décrits ci-avant, seulement à titre d'exemple, mais elle englobe toutes les variantes que pourra envisager l'homme de l'art dans le cadre des revendications ci-après.

## Revendications

1. Procédé de diagnostic de pannes simples survenues dans des matériels ($V_i$) et représentées par des fichiers de données ($JDD_i$), **caractérisé en ce qu'**il consiste, en présence d'un vecteur dit « forme » $x_i$ résultant de la transformation d'un fichier de données ($JDD_i$) issu d'un matériel en panne ($V_i$), i) à calculer des valeurs représentatives de similarités entre ledit vecteur forme $x_i$ et des vecteurs dits « prototype » faisant partie d'une base de données de pannes simples X et représentatifs de M pannes simples identifiés $\omega_j$ pouvant survenir dans ledit matériel en panne ($V_i$), et de M ensembles de M-1 pannes simples $\omega_{j'}$ (avec j'≠j) excluant chacun l'une desdites M pannes simples identifiées $\omega_j$, puis ii) à déduire desdites valeurs de similarité une panne simple du matériel en panne ($V_i$).

2. Procédé selon la revendication 1, **caractérisé en ce qu'**au i) lesdites valeurs de similarité sont les résultats de mesures de dissimilarité entre ledit vecteur forme $x_i$ et des vecteurs prototypes.

3. Procédé selon la revendication 2, **caractérisé en ce qu'**en présence d'une base de données de pannes X contenant M premiers vecteurs prototypes $P1_j$ représentatifs respectivement des M pannes identifiées $\omega_j$ et M seconds vecteurs prototypes $P2_j$ représentatifs respectivement de M ensembles de M-1 pannes simples $\omega_j$, (avec j'≠j) excluant chacun l'une desdites M pannes identifiées $\omega_j$, on effectue au i), pour chaque panne identifiée $\omega_j$, une première mesure de dissimilarité entre ledit vecteur forme $x_i$ et le premier vecteur prototype $P1_j$ associé à cette panne identifiée $\omega_j$, de manière à obtenir une première valeur de similarité $S1_j$, et une seconde mesure de dissimilarité entre ledit vecteur forme $x_i$ et le second vecteur prototype $P2_j$ associé à cette panne identifiée $\omega_j$, de manière à obtenir une seconde valeur de similarité $S2_j$, puis au ii) on retient chaque première valeur de similarité $S1_j$ qui est inférieure à la seconde valeur de similarité $S2_j$ correspondante, et on sélectionne parmi ces premières valeurs de similarité $S1_j$ retenues celle qui est la plus petite et qui correspond alors à la panne du matériel en panne ($V_i$).

4. Procédé selon la revendication 3, **caractérisé en ce qu'**au ii) en présence de plusieurs premières valeurs de similarité $S1_j$ sélectionnées et égales, on signale lesdites pannes $\omega_j$ qui correspondent respectivement auxdites premières valeurs de similarité $S1_j$ sélectionnées.

5. Procédé selon l'une des revendications 3 et 4, **caractérisé en ce qu'**au ii), en présence de premiers vecteurs prototypes $P1_j$ constitués, d'une part, d'un premier vecteur $a1_j$ dont chaque variable $a1_{jk}$ constituante est représentative de la valeur de variable $x_{ik}$ (k = 1 à N) qui est majoritaire dans les vecteurs formes $x_i$ ($x_i = (x_{i1},..., x_{iN})$) considérés d'un premier sous-ensemble $X1_j$, qui correspondent à la panne $\omega_j$, et d'autre part, d'un second vecteur $\varepsilon1_j$ dont chaque variable $\varepsilon1_{jk}$ constituante est représentative de la variation des valeurs de variable $x_{ik}$ du premier sous-ensemble $X1_j$ par rapport à la variable $a1_{jk}$ correspondante, et en présence de seconds vecteurs prototypes $P2_j$ constitués, d'une part, d'un premier vecteur $a2_j$ dont chaque variable $a2_{jk}$ constituante est représentative de la valeur de variable $x_{ik}$ qui est majoritaire dans les vecteurs formes $x_i$ considérés d'un second sous-ensemble $X2_j$, qui ne correspondent pas à la panne $\omega_j$, et d'autre part, d'un second vecteur $\varepsilon2_j$ dont chaque variable $\varepsilon2_{jk}$ constituante est représentative de la variation des valeurs de variable $x_{ik}$ du second sous-ensemble $X2_j$ par rapport à la variable $a2_{jk}$ correspondante, on détermine chaque première valeur de similarité $S1_j$ en effectuant une somme pondérée des différences entre les variables de même indice k du vecteur forme $x_i$ et du premier vecteur $a1_j$, et on détermine chaque seconde valeur de similarité $S2_j$ en effectuant une somme pondérée des différences entre les variables de même indice k du vecteur forme $x_i$ et du premier vecteur $a2_j$.

6. Procédé selon la revendication 5, **caractérisé en ce que** chaque première mesure de dissimilarité est définie par la relation

$$ds1(x_i, P1_j) = \sum_{k=1}^{N} \left( \ln \frac{1 - \varepsilon1_{jk}}{\varepsilon1_{jk}} \right) \left| x_{ik} - a1_{jk} \right|,$$

et **en ce que** chaque seconde mesure de dissimilarité est définie par la relation

$$ds2(x_i, P2_j) = \sum_{k=1}^{N} \left( \ln \frac{1 - \varepsilon2_{jk}}{\varepsilon2_{jk}} \right) \left| x_{ik} - a2_{jk} \right|.$$

7. Procédé selon l'une des revendications 1 à 6, **caractérisé en ce qu'**en cas de réception d'un fichier de données ($JDD_i$), on transforme ce dernier en un vecteur forme $x_i$ constitué d'un ensemble de N variables $x_{ik}$ ($x_i = (x_{i1},..., x_{iN})$, avec k = 1 à N) associées respectivement à N codes de défaut $CD_{ik}$ pouvant survenir dans ledit matériel en panne ($V_i$), chaque variable $x_{ik}$ pouvant prendre des première et seconde valeurs représentatives respectivement de la détection au moins une fois et de l'absence de détection du code de défaut $CD_{ik}$ dans ledit fichier ($JDD_i$).

8. Procédé de diagnostic de pannes simples survenues dans des matériels ($V_i$) et représentées par des fichiers de données ($JDD_i$) selon l'une quelconque des revendications précédentes, **caractérisé en ce que** la base de données est obtenue par un procédé de génération de base(s) de données représentatives de pannes survenues dans des matériels ($V_i$), consistant i) à stocker des fichiers de données ($JDD_i$) issus de matériels ($V_i$) et représentatifs de défauts survenus dans certains de leurs éléments, puis ii) à transformer chaque fichier de données ($JDD_i$) en un vecteur dit « forme » $x_i$, et iii) à construire pour chacune de M pannes identifiées $\omega_j$ des vecteurs dits « prototypes » à partir des vecteurs formes $x_i$, de manière à constituer une base de données X contenant des vecteurs prototypes représentatifs des M pannes identifiées $\omega_j$ et de M ensembles de M-1 pannes $\omega_j$, (avec j'≠j) excluant chacun l'une des M pannes identifiées $\omega_j$.

9. Procédé de diagnostic de pannes simples survenues dans des matériels ($V_i$) et représentées par des fichiers de données ($JDD_i$) selon la revendication 8, **caractérisé en ce qu'**au ii) on transforme chaque fichier de données ($JDD_i$) en un vecteur forme $x_i$ constitué d'un ensemble de N variables $x_{ik}$ ($x_i = (x_{i1},..., x_{iN})$, avec k = 1 à N) associées respectivement à N codes de défaut $CD_{ik}$ pouvant survenir dans le matériel ($V_i$) correspondant, chaque variable $x_{ik}$ pouvant prendre des première et seconde valeurs représentatives respectivement de la détection au moins une fois et de l'absence de détection du code de défaut $CD_{ik}$ dans ledit fichier ($JDD_i$).

10. Procédé de diagnostic de pannes simples survenues dans des matériels ($V_i$) et représentées par des fichiers de données ($JDD_i$) selon la revendication 9, **caractérisé en ce qu'**au ii) on détermine parmi les vecteurs formes $x_i$ ceux qui ne correspondent qu'à une unique panne puis parmi ces derniers ceux qui correspondent à une panne $\omega_j$ (j = 1 à M) choisie parmi les M pannes identifiées $\omega_j$ de manière à regrouper pour chaque panne identifiée $\omega_j$ dans des premier $X1_j$ et second $X2_j$ sous-ensembles, les vecteurs formes $x_i$ qui respectivement correspondent et ne correspondent pas à cette panne $\omega_j$, et **en ce qu'**au iii) on construit pour chaque panne identifiée $\omega_j$ des premier $P1_j$ et second $P2_j$ vecteurs prototypes à partir des vecteurs formes $x_i$ qui sont respectivement contenus dans lesdits premier $X1_j$ et second $X2_j$ sous-ensembles, de manière à constituer une base de données de pannes X contenant M premiers vecteurs prototypes $P1_j$ représentatifs respectivement des M pannes $\omega_j$ identifiées et M seconds vecteurs prototypes $P2_j$ représentatifs respectivement de M ensembles de M-1 pannes $\omega_j$, (avec j'≠j) excluant chacun l'une des M pannes identifiées $\omega_j$.

11. Dispositif (D) de diagnostic de pannes simples survenues dans des matériels ($V_i$) et représentées par des fichiers de données ($JDD_i$), **caractérisé en ce qu'**il comprend des moyens de traitement (MT) agencés, en présence d'un vecteur dit « forme » $x_i$ résultant de la transformation d'un fichier de données ($JDD_i$) issu d'un matériel en panne ($V_i$), i) pour calculer des valeurs représentatives de similarités entre ledit vecteur forme $x_i$ et des vecteurs dits « prototype » faisant partie d'une base de données de pannes simples X et représentatifs de M pannes simples identifiées $\omega_j$ pouvant survenir dans ledit matériel en panne ($V_i$) et de M ensembles de M-1 pannes simples $\omega_j$, (avec j'≠j) excluant chacun l'une desdites M pannes simples identifiées $\omega_j$, puis ii) pour déduire desdites valeurs de similarité une panne simple du matériel en panne ($V_i$).

12. Utilisation des procédé et dispositif (D) selon l'une des revendications précédentes dans le cas de matériels ($V_i$) de type véhicule automobile.

**11**

Figure unique

**Office européen des brevets**

**RAPPORT DE RECHERCHE EUROPEENNE**

Numéro de la demande

EP 08 16 0244

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 7 100 081 B1 (PURDY MATTHEW A [US] ET AL) 29 août 2006 (2006-08-29) <br> * colonne 5, ligne 51 - ligne 65 * <br> ----- | 1,8,11 | INV. <br> G05B23/02 |

| DOMAINES TECHNIQUES RECHERCHES (IPC) |
|---|
| G05B <br> G07C |

Le présent rapport a été établi pour toutes les revendications

| Lieu de la recherche | Date d'achèvement de la recherche | Examinateur |
|---|---|---|
| La Haye | 24 septembre 2008 | Kelperis, K |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 08 16 0244

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

24-09-2008

| Document brevet cité au rapport de recherche | Date de publication | Membre(s) de la famille de brevet(s) | Date de publication |
|---|---|---|---|
| US 7100081          B1 | 29-08-2006 | AUCUN | |

EPO FORM P0460

Pour tout renseignement concernant cette annexe : voir Journal Officiel de l'Office européen des brevets, No.12/82

**RÉFÉRENCES CITÉES DANS LA DESCRIPTION**

**Documents brevets cités dans la description**

• WO 2006127051 A